# EUROPEAN PATENT APPLICATION

(11) **EP 4 475 063 A1**
(43) Date of publication of application: **11.12.2024**
(21) Application number: 24179771.1
(22) Date of filing: 04.06.2024
(51) Int. Cl.: G06Q 30/0601, G06Q 50/04, A43B 3/00, G06F 111/16, G06F 113/10

(54) **DESIGN SUPPORT DEVICE AND DESIGN SUPPORT METHOD**

(30) Priority: 05.06.2023 JP 2023092431
(71) Applicant: ASICS Corporation, Kobe-shi, Hyogo 650-8555 (JP)
(72) Inventor: KOZUKA, Yuya, Kobe-shi, 650-8555 (JP)
(74) Representative: TBK

(57) **Abstract**

Provided are a design support device (1) and a design support method capable of supporting a design of an article that meets preferences of a user while securing a feature required in the article worn by the user. The design support device (1) is a design support device that supports the design of the article worn by the user. The design support device (1) includes an input device (14), a processing circuitry (11), and an output device (14). The processing circuitry (11) calculates a first evaluation value by evaluating a difference in appearance between first information (111) and design data (200), calculates a second evaluation value predicted from the design data (200) for a feature of the article required from second information (120), corrects the design data (200) based on the first evaluation value and the second evaluation value in a case where at least one of the first evaluation value and the second evaluation value is lower than a target value, and outputs the design data (200) in a case where the first evaluation value and the second evaluation value are greater than or equal to the target value.

## Description

### BACKGROUND

### Technical field

The present disclosure relates to a design support device and a design support method.

### Background Information

In recent years, as customer (user) preferences have become increasingly diverse, manufacturing processes have been developed to enable production of a wide variety of products in small quantities in response to these preferences. For example, Japanese Patent Publication No. 2022-083981 discloses, as an intuitive customization system, a system that can connect a server, a display device, and an interface unit to a factory or a work place for manufacturing a product (for example, a shoe) via the Internet, and can be used to produce and purchase a product designed to meet the customer preferences.

### SUMMARY

In the system disclosed in Japanese Patent Publication No. 2022-083981, since the product is produced to meet the customer preferences, the product can be produced and purchased by specifying a shape, a color, or a material for each part of the product. However, since the shape and the material of the specified parts may affect a feature of the product to be produced, there has been a risk that the product may be produced and purchased that does not provide the feature required even if the product meet the customer preferences.

The present disclosure has been made to solve such problem, and aims to provide a design support device and a design support method capable of supporting a design of an article that meets preferences of a user while securing a feature required in the article worn by the user.

A design support device according to an aspect of the present disclosure is a design support device that supports a design of an article worn by a user. The design support device includes: an input device that receives at least first information related to an appearance of the article selected or input by the user, and second information related to usage of the article by the user; a processing circuitry that corrects design data of the article based on the first information and the second information received by the input device; and an output device that outputs the design data corrected by the processing circuitry. The processing circuitry calculates a first evaluation value by evaluating a difference in appearance between the first information and the design data, calculates a second evaluation value predicted from the design data for a feature of the article required from the second information, corrects the design data based on the first evaluation value and the second evaluation value in a case where at least one of the first evaluation value and the second evaluation value is lower than a target value, and outputs the design data in a case where the first evaluation value and the second evaluation value are greater than or equal to the target value.

A design support method according to an aspect of the present disclosure is a design support method for supporting a design of an article worn by a user. The design support method includes: receiving at least first information related to an appearance of an article selected or input by the user, and second information related to usage of the article by the user; calculating a first evaluation value by evaluating a difference in appearance between the first information received and design data; calculating a second evaluation value predicted from the design data for a feature of the article required from the second information received; correcting the design data based on the first evaluation value and the second evaluation value in a case where at least one of the first evaluation value and the second evaluation value is lower than a target value; and outputting the design data in a case where the first evaluation value and the second evaluation value are greater than or equal to the target value.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram illustrating a process of a design support device according to a first embodiment.
Fig. 2 is a block diagram illustrating a configuration of the design support device according to the first embodiment.
Fig. 3 is a mode diagram illustrating a design according to the first embodiment.
Fig. 4 is a mode diagram illustrating a relationship between the design and a feature.
Fig. 5 is a mode diagram illustrating a process of the design support device according to the first embodiment.
Fig. 6A is a diagram illustrating an example of a feature evaluation model according to the first embodiment.
Fig. 6B is a diagram illustrating an example of the feature evaluation model according to the first embodiment.
Fig. 7 is a mode diagram illustrating a process of the design support device according to a second embodiment.
Fig. 8 is a mode diagram illustrating a process of the design support device according to a third embodiment.
Fig. 9 is a mode diagram illustrating a process of the design support device according to a variation of the third embodiment.
Fig. 10 is a mode diagram illustrating a process of the design support device according to a fourth embodiment.

### DETAILED DESCRIPTION

Hereinafter, embodiments of the design support device and the design support method will be described with reference to the drawings. In the following description, the same configuration is denoted by the same reference numeral. The names and features thereof are also the same. Accordingly, detailed descriptions thereof will not be repeated. Note that, in the following description, an example of design support of the shoe worn by the user in the design support device and the design support method will be described. However, the present invention is not limited to the design support of a shoe, but can be similarly applied to design support of an article worn by the user such as footwear and wear.

### (First embodiment)

### [Configuration of design support device]

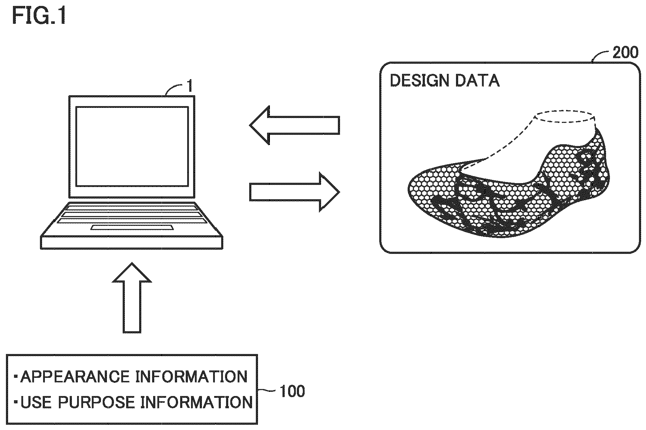

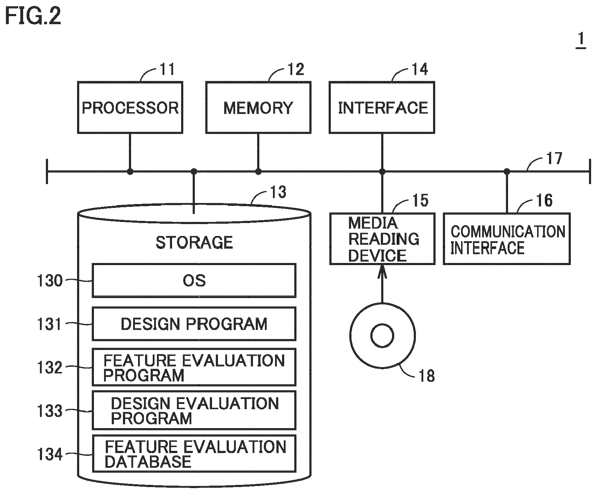

Fig. 1 is a schematic diagram illustrating a process of a design support device 1 according to an embodiment. Fig. 2 is a block diagram illustrating a configuration of the design support device 1 according to the embodiment. In a store such as a shoe store, an event venue, or the like, a custom-made shoe may be manufactured in accordance with shapes of individual's feet. At that time, the shoe is designed by incorporating a pattern (for example, a flower pattern) that meets the preferences of the user. The design support device 1 illustrated in Fig. 1 corrects design data 200 designed in accordance with the preferences of the user while securing the feature required by the user based on input information 100 including appearance information (first information) that meets the preferences of the user and use purpose information (second information) of use of the shoe by the user.

As illustrated in Fig. 2, the design support device 1 includes a processor 11, a memory 12, a storage 13, an interface 14, a media reading device 15, and a communication interface 16. Configurations thereof are connected via a processor bus 17.

The processor 11 is an example of the "processing circuitry". The processor 11 is a computer that reads out programs (for example, an operating system (OS) 130, a design program 131, a feature evaluation program 132, and a design evaluation program 133) stored in the storage 13, develops the read program in the memory 12, and executes the program. The processor 11 includes, for example, a central processing unit (CPU), a field programmable gate array (FPGA), a graphics processing unit (GPU), a multiprocessing unit (MPU), or the like. Note that the processor 11 may include a processing circuitry.

The memory 12 includes a volatile memory such as a dynamic random access memory (DRAM) or a static random access memory (SRAM), or a nonvolatile memory such as a read only memory (ROM) or a flash memory.

The storage 13 includes, for example, a nonvolatile storage device such as a Hard Disk Drive (HDD) or a Solid State Drive (SSD). In addition to programs such as the OS 130, the design program 131, the feature evaluation program 132, and the design evaluation program 133, data such as the design data 200 is stored in the storage 13. Further, the storage 13 also functions as a feature evaluation database 134 that stores a plurality of feature evaluation models to be described later.

The design program 131 is a program for executing a process of designing a structure, an appearance, and the like of the shoe according to the preferences of the user and outputting the design data 200, or a process of correcting the design data 200. The feature evaluation program 132 is a program for evaluating the feature of the shoe manufactured by the design data 200 based on use purpose information of the shoe. The design evaluation program 133 is a program for evaluating the appearance of the shoe manufactured by the design data 200 based on the appearance information preferred by the user. The shoe is an example of the "article" in the claims.

The interface 14 is an example of the "input device" or the "output device". The interface 14 is configured to, for example, receive an input to the design support device 1 from a keyboard, a mouse, a touch device, and the like as the "input device", and output the corrected design data 200 to a display and the like as the "output device".

The media reading device 15 houses a storage medium such as a removable disk 18, and acquires programs and data stored in the removable disk 18 and the like.

The communication interface 16 is an example of the "input device" or the "output device". The communication interface 16 receives and transmits the data from and to other devices by performing wired communication or wireless communication. For example, the communication interface 16 receives an input of the design data 200 from another design device as the "input device", and outputs the design data 200 to a three-dimensional printer device as the "output device".

Note that the design support device 1 to be described below executes the design program 131 to design the structure, the appearance, and the like of the shoe according to the preferences of the user and design the design data 200 in an initial stage. However, the design data 200 in the initial stage is not limited to be designed by the design support device 1, and an input of the design data 200 in the initial stage may be received from another design device through the communication interface 16. In addition, the design support device 1 may read the design data 200 in the initial stage stored in the removable disk 18 by the media reading device 15.

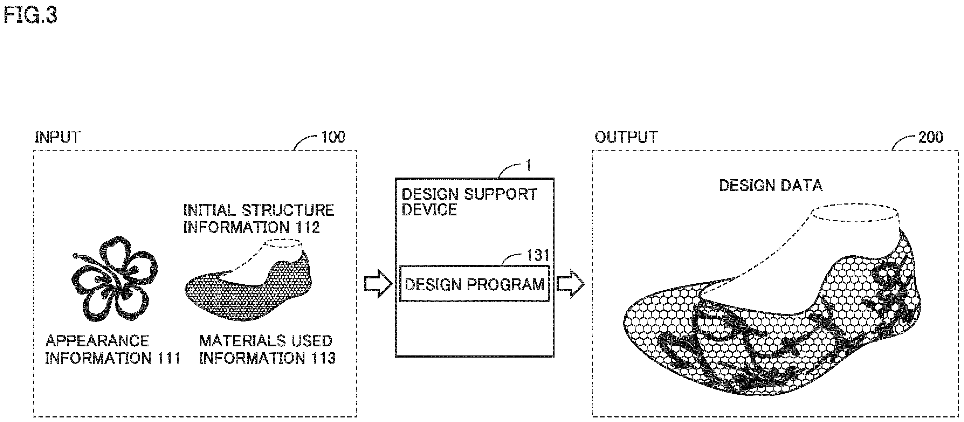

Fig. 3 is a mode diagram illustrating the design according to the first embodiment. In the design of the shoe illustrated in Fig. 3, for example, a case of designing an upper or the entire shoe including a single member and having a three-dimensional lattice structure will be described as an example. Certainly, the design of the shoe is not limited to the design of the upper or the entire shoe having the three-dimensional lattice structure, and may be a design of a sole or a design of a shoe manufactured by sticking or stitching a plurality of members.

First, as illustrated in Fig. 3, the design program 131 designs the design data 200 in the initial stage according to the preferences of the user. Note that the design program 131 is a program to be executed by the design support device 1. In the design support device 1, first, the input information 100 including appearance information 111, initial structure information 112, and materials used information 113 is input to the design support device 1. The appearance information 111 is, for example, information of a favorite pattern of the user, and includes, for example, information of a flower pattern. The initial structure information 112 is information related to a structure of the upper or the entire shoe, and is, for example, information of a three-dimensional mesh structure obtained by distorting interconnected unit lattice structures according to an outer shape of the upper or the shoe in a case where the three-dimensional lattice structure is adopted. Note that, as such unit lattice structure, it is possible to apply various structures such as a rectangular parallelepiped lattice, a diamond lattice, an octahedral lattice, a double pyramid lattice, a rhombus dodecahedron lattice, or a lattice obtained by adding various supports to these lattices.

The materials used information 113 is preferably a resin material or a rubber material to have appropriate flexibility, stretchability, durability, elasticity, and the like, which are information of a material used for the upper or the shoe. More specifically, in a case where the upper or the shoe is made of resin, for example, polyolefin resin, an ethylene-vinyl acetate copolymer (EVA), a polyamide-based thermoplastic elastomer (TPA and TPAE), a thermoplastic polyurethane (TPU), or a polyester-based thermoplastic elastomer (TPEE) can be used as the materials used information 113. On the other hand, in a case where the upper or the shoe is made of rubber, for example, a butadiene rubber (BR) can be used as the materials used information 113.

The design support device 1 generates an image with a style changed to enable an image of the favorite pattern of the user included in the appearance information 111 to be mapped to the structure of the upper or the entire shoe. In Fig. 3, a style of a flower pattern included in the input information 100 is changed to map the flower pattern to the structure of the upper or the entire shoe shown in the design data 200. As a method of changing the style of the image, there are a method using machine learning or a neural network, a method using texture synthesis, and the like, and specifically, an algorithm called "style transfer" or the like may be used.

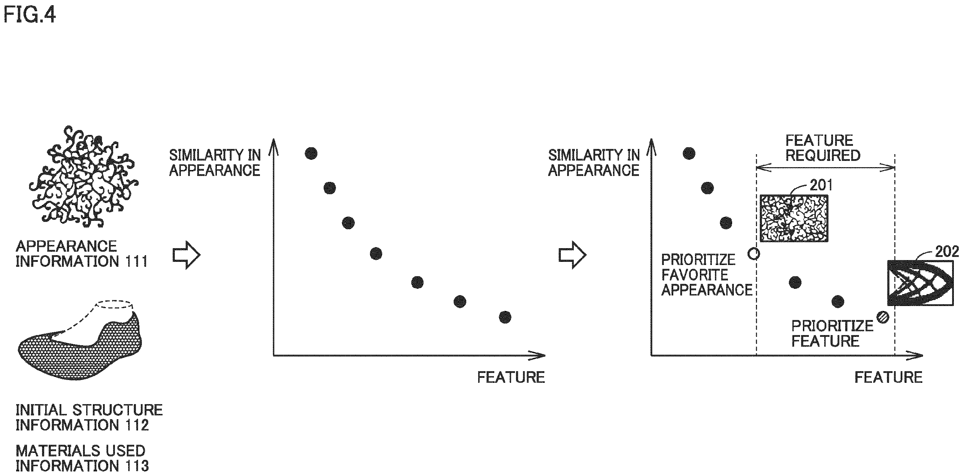

The design support device 1 designs the design data 200 in the initial stage in which the favorite pattern of the user is mapped to the structure of the upper or the entire shoe based on the appearance information 111, the initial structure information 112, and the materials used information 113. However, in a case where the favorite pattern of the user is simply mapped, the pattern may affect the feature of the upper or the entire shoe, and the feature required by the user may not be obtained. Fig. 4 is a mode diagram illustrating the relationship between the design and the feature. Fig. 4 illustrates a relationship between a similarity in appearance and the feature in the appearance information 111 and the design data 200 in the initial stage in a case where the favorite pattern of the user is mapped to the structure of the upper or the entire shoe.

For example, in a case where the favorite pattern of the user is directly mapped to the structure of the upper or the entire shoe, the favorite pattern of the user can be visually recognized in a simple manner, and the similarity in appearance is high. However, since the favorite pattern of the user becomes a part of the structure of the upper or the entire shoe, the feature (for example, stability) of the shoe is reduced. On the other hand, in a case where the favorite pattern of the user is changed and mapped to the structure of the upper or the entire shoe by using a topology optimization (phase optimization) method, the favorite pattern of the user becomes difficult to be visually recognized, and the similarity in appearance decreases. However, since the favorite pattern of the user is deformed to obtain optimum material density distribution based on set conditions, the feature (for example, stability) of the shoe will be enhanced.

In other words, since there is a trade-off relationship between the similarity in appearance and the feature of the shoe, if the design is simply designed to meet the preferences of the user, it is difficult to secure the feature required by the user. Conversely, if the feature required by the user is prioritized, the design does not meet the preferences of the user. Therefore, the design support device 1 according to the present disclosure performs design evaluation for evaluating a difference in appearance between the appearance information 111 and the design data 200, and feature evaluation for evaluating a feature predicted from the design data 200 with respect to the feature of the shoe required from the use purpose information, and supports the design of the shoe that meets the preferences of the user while securing the feature required for the shoe worn by the user. As in a graph illustrated on the right side of Fig. 4, the design support device 1 supports the design of the shoe that meets the preferences of the user from a range of required features. Specifically, the design support device 1 supports the design to, for example, select design data 201 if favorite appearance is prioritized, and select design data 202 if the feature is prioritized.

### [Processes of design support device]

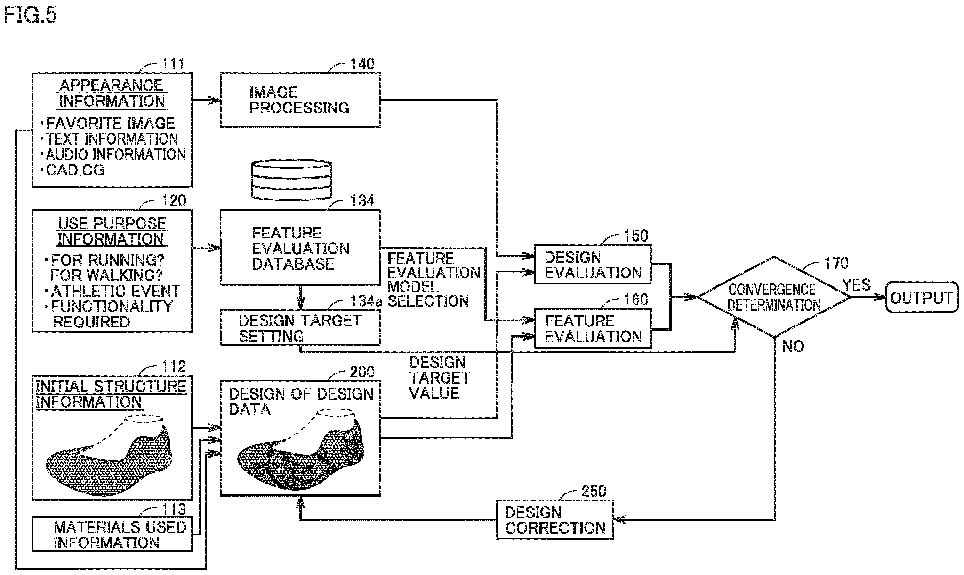

Next, a process in the design support device 1 will be described. Fig. 5 is a mode diagram illustrating a process of the design support device 1 according to the first embodiment. The design support device 1 receives an input of the appearance information 111 (the first information) that meets the preferences of the user. The received appearance information 111 may be not only a favorite image but also text information or audio information. For example, the appearance information 111 may be text information or audio information of a "flower pattern" instead of an image of the flower pattern. Further, the appearance information 111 may be computer aided design (CAD) data or computer graphics (CG) data.

The received appearance information 111 is used for designing the design data 200 in the initial stage together with the initial structure information 112 and the materials used information 113. On the other hand, the design support device 1 performs an image processing 140 on the received appearance information 111 for design evaluation 150. In the image processing 140, a process of converting the appearance information 111 into image data of the pattern is performed to easily compare the pattern included in the design data 200 with the pattern included in the appearance information 111. Specifically, in the image processing 140, a process is performed to draw a favorite image, retrieve the favorite image from the text information or the audio information from an image database (not illustrated), and extract the favorite pattern from two-dimensional or three-dimensional CAD data or CG data.

In the design evaluation 150, a difference or a similarity is evaluated between the appearance information 111 (the favorite pattern of the user) processed in the image processing 140 and the appearance (a pattern of the shoe) of the design data 200. In the design evaluation 150, a known algorithm for evaluating a difference or a similarity between images may be used, and the method using the neural network or the like may also be used. In addition, the design evaluation 150 evaluates the difference or the similarity in appearance on a scale of, for example, 100, with 100 points for a small difference or a high similarity, and 0 points for a large difference or a low similarity, and the like to calculate a design evaluation value (the first evaluation value). Note that the image processing 140 and the design evaluation 150 can be implemented by executing the design evaluation program 133 in the design support device 1.

Next, the design support device 1 receives an input of use purpose information 120 (the second information) the shoe. The received use purpose information 120 includes information on whether the user wears the shoe when running or walking in daily life, information on an athletic event, information on the feature required for the shoe, and the like. The information on the athletic event includes, for example, information on a marathon, a short-distance sprint, basketball, baseball, and the like. The feature required for the shoe may include, for example, at least one of features such as cushioning, stability, agility, bending rigidity, gripping property, fitting, durability, air permeability, a lightweight property, resilience, and support against cutting move. Note that the features required for the shoe shown in the present disclosure are merely examples, and are not limited to these features. In addition, in the case of footwear or wear other than the shoe, a feature required is set for each of articles.

The features required for the shoe will be described in detail. First, among the features required for the shoe, cushioning is a feature of the shoe that absorbs an impact when the user wears the shoe and lands on a ground. For cushioning, for example, a magnitude of the impact felt by the user when the user wears the shoe and lands on the ground is predicted by simulation from the design data 200 and evaluated on the scale of 100, or the difference from a reference value is evaluated.

Among the features required for the shoe, the stability is a feature of the shoe such as a shift in a horizontal direction with respect to a ground contact surface when the user wears the shoe and lands on the ground, and an inclination in a frontal plane. For the stability, for example, a magnitude of the shift in the horizontal direction felt by the user when the user wears the shoe and lands on the ground, the inclination in the frontal plane, or the like is predicted by the simulation from the design data 200 and evaluated on the scale of 100, or a difference from a reference value is evaluated.

Among the features required for the shoe, the agility is a feature of the shoe that follows a movement of the user when the user wears the shoe and does exercises. As for the agility, for example, followability of the shoe felt by the user when the user wears the shoe and does exercises is predicted by simulation from the design data 200 and evaluated in the scale of 100, or a difference from a reference value is evaluated.

Among the features required for the shoe, the bending rigidity is a feature of the shoe indicating ease of bending of the shoe when the user wears the shoe and runs. As for the bending rigidity, for example, the ease of the bending of the shoe felt by the user when the user wears the shoe and runs is predicted by the simulation from the design data 200 and evaluated on the scale of 100, or a difference from a reference value is evaluated.

Among the features required for the shoe, gripping property is a feature of the shoe indicating a magnitude of friction between the ground contact surface and the shoe or between an inner portion of the shoe and a foot portion of the user when the user wears the shoe and runs. As for gripping property, for example, the magnitude of the friction between the ground contact surface and the shoe felt by the user when the user wears the shoe and runs is predicted by the simulation from the design data 200 and evaluated on the scale of 100, or a difference from a reference value is evaluated.

Among the features required for the shoe, the air permeability is a feature of the shoe indicating an amount of air passing through the shoe. As for the air permeability, for example, the amount of the air passing through the shoe, a temperature, and a humidity are predicted by simulation from the design data 200 and evaluated on the scale of 100, or a difference from a reference value is evaluated.

Among the features required for the shoe, the lightweight property is a feature of the shoe related to a weight of the shoe. As for the lightweight property, for example, the weight of the shoe is predicted by simulation from a materials used and the design data 200 and evaluated in the scale of 100, or a difference from a reference value is evaluated.

Among the features required for the shoe, the resilience is a feature of the shoe indicating a magnitude of a pushing back force when the user wears the shoe and lands on the ground. As for the resilience, for example, a value such as a load displacement response when the shoe is compressed is predicted by simulation from the design data 200 and evaluated on the scale of 100, or a difference from a reference value is evaluated.

Among the features required for the shoe, support against cutting move is a feature of the shoe indicating a sense of stability when the user wears the shoe and moves in a left-right direction. As for support against cutting move, for example, a deformation amount of the shoe is predicted by simulation from the design data 200 when the user wears the shoe and moves in the left-right direction, and evaluated on the scale of 100, or a difference from a reference value is evaluated.

As for the features required for the shoe as described above, levels of the features vary depending on whether the user wears the shoe when running or walking in the daily life, the athletic event, or the like. For example, the shoe worn by the user when running is required to have a high level of cushioning and the stability. However, the shoe worn during the walking in the daily life are not required to have the high level of cushioning and the stability as the shoe worn during the running.

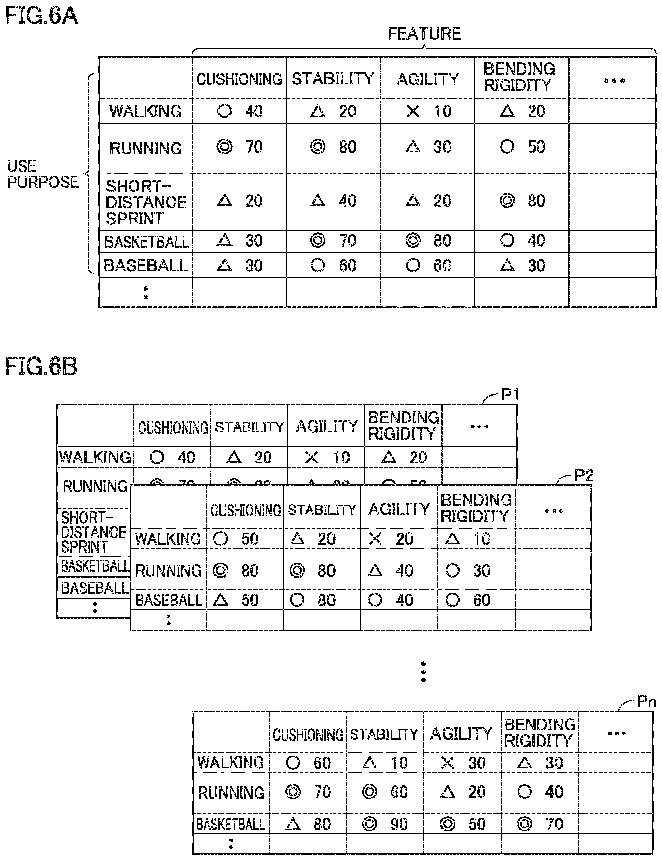

Therefore, in a case of evaluating the features of the shoe, it is necessary to prepare the feature evaluation model according to use purposes. Specifically, the feature evaluation model of the shoe based on the use purposes and the features required for the shoe will be described. Figs. 6A and 6B are the diagrams illustrating the examples of the feature evaluation model according to the first embodiment. In Fig. 6A, the "walking", the "running", the "short-distance sprint", the "basketball", and the "baseball" are illustrated as the use purposes, and design target values required for the features of the "cushioning", the "stability", the "agility", and the "bending rigidity" are set for each of the use purposes. The feature evaluation model for the each of the use purposes as illustrated in Fig. 6A is stored in the storage 13 as the feature evaluation database 134.

In the feature evaluation model for the "running" illustrated in Fig. 6A, the design target values of the "cushioning" and the "stability" are high, and are as high as 70 points and 80 points in 100 scale evaluation. On the other hand, in the feature evaluation model for the "short-distance sprint", the design target value of the "bending rigidity" is high, and is as high as 80 points in the 100 scale evaluation. In addition, in the feature evaluation model for the "basketball", the design target values of the "stability" and the "agility" are high, and are as high as 70 points and 80 points in the 100 scale evaluation.

Note that the feature evaluation database 134 may store not only the feature evaluation model set for the each of the use purposes, but also a plurality of feature evaluation models according to attribute information (for example, gender, physical information, athletic ability, and the like) of the user. For example, in Fig. 6B, the plurality of feature evaluation models are stored in the feature evaluation database 134 by being divided to a feature evaluation model included in a group P1 "for male", a feature evaluation model included in a group P2 "for female", and a feature evaluation model included in a group Pn "for professional players". The groups of feature evaluation models illustrated in Fig. 6B are examples, and it is possible to create, as the physical information, a group of feature evaluation models for a small body shape, and a group of feature evaluation models for a large body shape, as well as a group of feature evaluation models according to a normal activity amount as the athletic ability.

Returning to Fig. 5, the design support device 1 selects one feature evaluation model from the plurality of feature evaluation models illustrated in Fig. 6A according to the use purpose information 120 of the shoe. For example, in a case of receiving information (the use purpose information 120 of the shoe) indicating that the user wears the shoe when running, the design support device 1 selects the feature evaluation model for the "running", and sets a feature (the "cushioning", the "stability", or the like) of the shoe required for evaluation by the feature evaluation model as an item to be evaluated in feature evaluation 160. Note that, in a case where the user adds a feature required for the shoe to the use purpose information 120 of the shoe in addition to evaluation items set based on the feature evaluation model, it is preferable that the design support device 1 additionally sets the added feature as an item to be evaluated in the feature evaluation 160.

In the feature evaluation 160, a feature evaluation value (the second evaluation value) predicted from the design data 200 is calculated for the features of the shoe required from the use purpose information 120 of the shoe. Specifically, in a case where the use purpose information 120 of the shoe is the "running", in the feature evaluation 160, the feature evaluation values are calculated for the "cushioning", the "stability", the "agility", the "bending rigidity", and the like from the design data 200. In the feature evaluation 160, a known algorithm used for a numerical analysis method may be used, and for example, the feature evaluation values are calculated for the "cushioning", the "stability", the "agility", the "bending rigidity", and the like from the design data 200 based on a surrogate model represented by a finite element method (FEM), a response surface method, or the like. Note that the feature evaluation 160 can be implemented by executing the feature evaluation program 132 in the design support device 1.

The design support device 1 sets the items to be evaluated in the feature evaluation 160, and performs design target setting 134a for setting the design target value for each of the set items. In the design target setting 134a, in a case where the use purpose is the "running", the design target values are set for the "cushioning" = 70 points, the "stability" = 80 points, the "agility" = 30 points, and the "bending rigidity" = 50 points (see Fig. 6A).

Further, in convergence determination 170, in the design support device 1 determines whether the design evaluation value (the first evaluation value) and the feature evaluation value (the second evaluation value) are greater than or equal to design target values. Note that it is assumed that the design target value for the design evaluation value is set to, for example, 70 points in advance. Specifically, in a case where the use purpose is the "running", if the design evaluation value is greater than or equal to 70 points, and for the feature evaluation values, "cushioning" is greater than or equal to 70 points, the "stability" is greater than or equal to 80 points, the "agility" is greater than or equal to 30 points, and the "bending rigidity" is greater than or equal to 50 points, the design support device 1 outputs the design data 200 as a final design, assuming that the design target values are cleared in the convergence determination 170 (YES).

On the other hand, in a case where the use purpose is the "running", if there is at least one evaluation result among the design evaluation value of less than 70 points, and the feature evaluation values of the "cushioning" of less than 70 points, the "stability" of less than 80 points, the "agility" of less than 30 points, and the "bending rigidity" of less than 50 points, the design support device 1 performs design correction 250 on the design data 200 to improve an item in which the design target value are not cleared from the evaluation result, assuming that the design target values are not cleared in the convergence determination 170 (NO). The design support device 1 performs the design evaluation 150 and the feature evaluation 160 again on the design data 200 subjected to the design correction 250 until the design target values are cleared in the convergence determination 170. Accordingly, the design support device 1 can support the design of the shoe that meets the preferences of the user while securing the features required for the shoe worn by the user.

The design support device 1 outputs, for example, the design data 200 that is the final design to the three-dimensional printer device. The three-dimensional printer device manufactures the shoe based on the design data 200. Note that the three-dimensional printer device manufactures a shaped article by, for example, resin 3d printing method through optical shaping modeling. Here, resin 3d printing method through the optical shaping modeling is a shaping method of manufacturing the shaped article in a desired shape by irradiating a photocurable liquid resin or liquid rubber, which is cured by light having a specific wavelength, as a main raw material, with the light having the specific wavelength to sequentially laminate cured portions. As the light having the specific wavelength, for example, ultraviolet rays are utilized, and in this case, an ultraviolet curable resin or rubber is used as the main raw material. Note that the liquid resin or liquid rubber described above as the main raw material is not limited to a one-pack resin or rubber, but may be a two-pack resin or rubber, or the like. In addition, the three-dimensional printer device may manufacture the shoe based on the design data 200 by resin 3d printing method through fused deposition modeling (FDM) that performs lamination shaping with a thermoplastic material.

As illustrated in Fig. 5, the design support method according to the present disclosure receives at least the appearance information 111 related to the appearance of the shoe selected or input by the user and the use purpose information 120 related to the use of the shoe by the user; calculates the design evaluation value by evaluating the difference in appearance between the received appearance information 111 and the design data; calculates the feature evaluation value predicted from the design data 200 for the feature of the shoe required from the received use purpose information 120; corrects the design data 200 based on the design evaluation value and the feature evaluation value in a case where at least one of the design evaluation value and the feature evaluation value is lower than the design target value; and outputs the design data in a case where the design evaluation value and the feature evaluation value are greater than or equal to the target values. Accordingly, the design support method according to the present disclosure can support the design of the article that meets the preferences of the user while securing the features required for the article worn by the user.

### (Second embodiment)

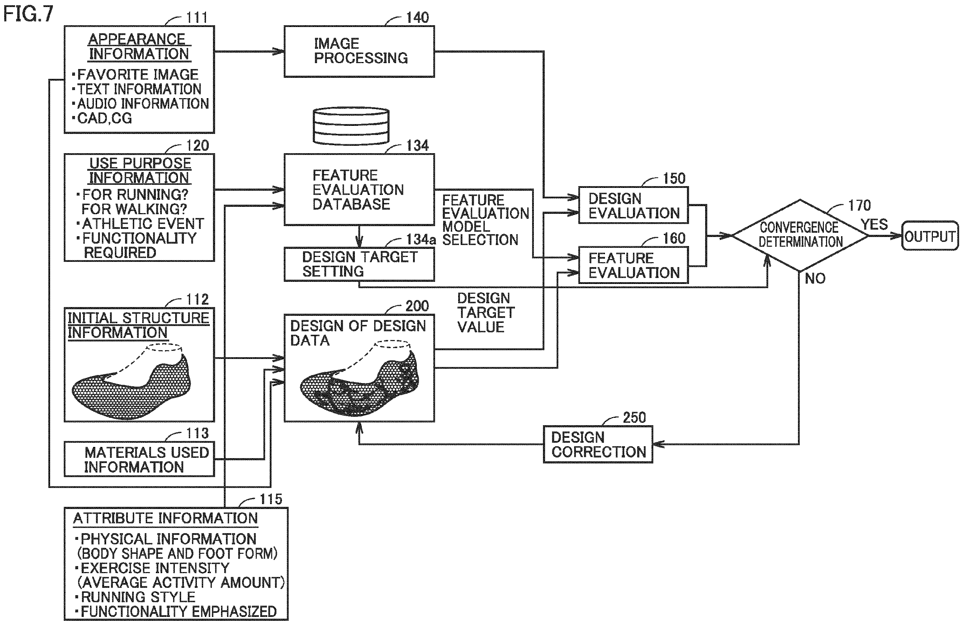

In Fig. 6B, it has been described that the group of feature evaluation models is prepared according to the attribute information of the user. Therefore, in the design support device according to the second embodiment, a configuration for selecting the feature evaluation model according to the attribute information of the user will be described. Fig. 7 is a mode diagram illustrating a process of the design support device 1 according to the second embodiment. In the design support device 1 according to the second embodiment, the same configuration as the configuration of the design support device 1 according to the first embodiment is denoted by the same reference numeral, and detailed description thereof will not be repeated.

As illustrated in Fig. 6B, the feature evaluation database 134 illustrated in Fig. 7 stores the plurality of feature evaluation models according to the attribute information 115(for example, the gender, the physical information, the athletic ability, and the like) of the user. Therefore, in a case where receiving the attribute information of the user, the design support device 1 selects the feature evaluation model according to the received attribute information. Specifically, in a case where the attribute information of "male" is received as the attribute information of the user, the feature evaluation model included in the group P1 illustrated in Fig. 6B is selected. The attribute information of the user input to the design support device 1 includes, in addition to the gender, the physical information (a body shape, a foot form, or the like), the athletic ability (a professional player, an amateur player, a normal activity amount, or the like), a running style (overpronation, neutral pronation, or the like), and the like.

The feature evaluation database 134 may prepare the group of feature evaluation models according to a combination of a plurality of pieces of attribute information. For example, the feature evaluation database 134 may prepare the group of feature evaluation models according to "male" × "large body shape", "female" × "overpronation", and the like. Further, the feature evaluation database 134 may prepare the feature evaluation model customized according to the features emphasized by the user. Accordingly, the feature evaluation model customized for each user can be prepared, and a more personalized design becomes possible.

### (Third embodiment)

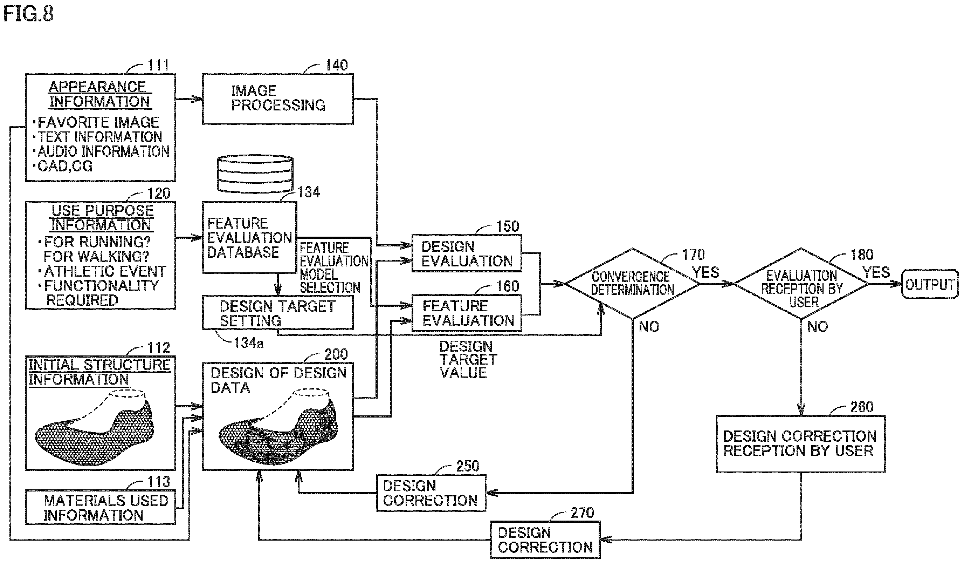

In the design support device according to the second embodiment, a configuration will be described in which the evaluation result of the user and a use result of the user can be fed back. Fig. 8 is a mode diagram illustrating a process of the design support device 1 according to the third embodiment. In the design support device 1 according to the third embodiment, the same configuration as the configuration of the design support device 1 according to the first embodiment is denoted by the same reference numeral, and detailed description thereof will not be repeated.

As illustrated in Fig. 8, the design support device 1 according to the third embodiment performs evaluation result reception 180 by the user for the design data 200 with the design target value cleared in the convergence determination 170. If the evaluation result received in the evaluation result reception 180 is an evaluation result that the design data 200 is adopted (YES), the design support device 1 outputs the design data 200 to the three-dimensional printer device as the final design.

On the other hand, if the evaluation result received in the evaluation result reception 180 is an evaluation result that the design data 200 is not adopted (NO), the design support device 1 performs design correction reception 260 by the user. In the design correction reception 260, for example, an instruction is received for correcting a position, a size, a shape, and the like of a pattern of the design data 200. The design support device 1 performs design correction 270 on the design data 200 based on the correction instruction received in the design correction reception 260. The design support device 1 performs the design evaluation 150 and the feature evaluation 160 again on the design data 200 subjected to the design correction 270 until the design target value is cleared in the convergence determination 170 and the evaluation result received in the evaluation result reception 180 becomes the evaluation result that the design data 200 is adopted. Accordingly, the design support device 1 can support the design of the shoe that meets the preferences of the user while securing the features required for the shoe worn by the user.

### (Variation)

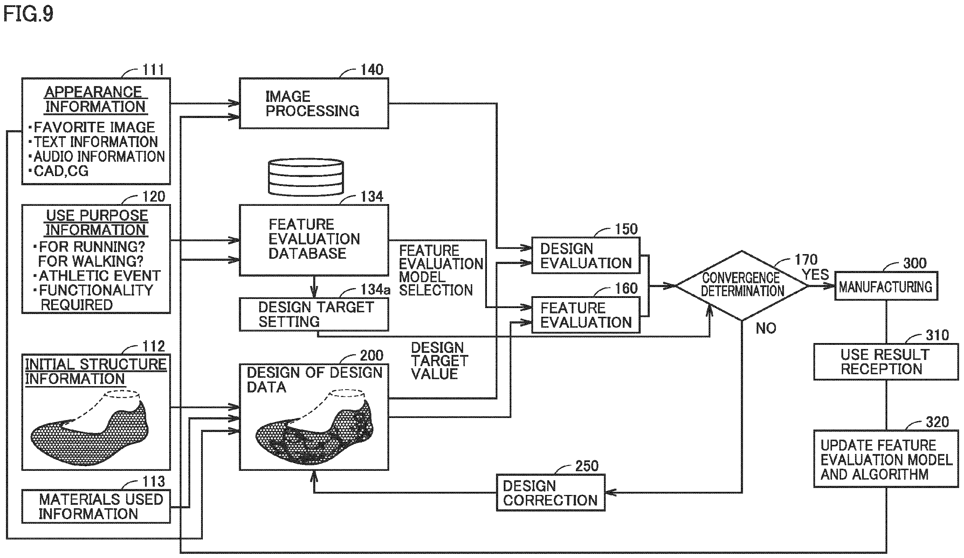

In the process of the design support device 1 illustrated in Fig. 8, the configuration has been described in which the evaluation result of the user is received and fed back at a stage of the design data 200. However, since the user can mainly evaluate the appearance of the shoe at the stage of the design data 200, a result that the manufactured shoe was used cannot be fed back. Therefore, in the variation, a configuration will be described in which a result that the shoe manufactured based on the design data 200 is used by the user is fed back. Fig. 9 is a mode diagram illustrating a process of the design support device 1 according to the variation of the third embodiment. In the design support device 1 according to the variation of the third embodiment, the same configuration as the configuration of the design support device 1 according to the first embodiment is denoted by the same reference numeral, and detailed description thereof will not be repeated.

Shoe manufacturing 300 is performed by the three-dimensional printer device based on the design data 200 that is the final design. After the user used the shoe manufactured in the shoe manufacturing 300, the design support device 1 performs use result reception 310 of the shoe used by the user. In the use result reception 310, the feature evaluation of the shoe such as cushioning or the stability is also received in addition to the evaluation of the appearance of the shoe.

Therefore, the design support device 1 performs an update process 320 of updating the feature evaluation model stored in the feature evaluation database 134, or updating an algorithm for mapping the image of the favorite pattern of the user to the structure of the upper or the entire shoe based on the use result of the user received in the use result reception 310. Accordingly, by performing the update process 320, the design support device 1 can support the design to be the design of the shoe that meets the preferences of the user, while securing the features required for the shoe worn by the user with respect to the design data 200 to be designed next time.

### (Fourth embodiment)

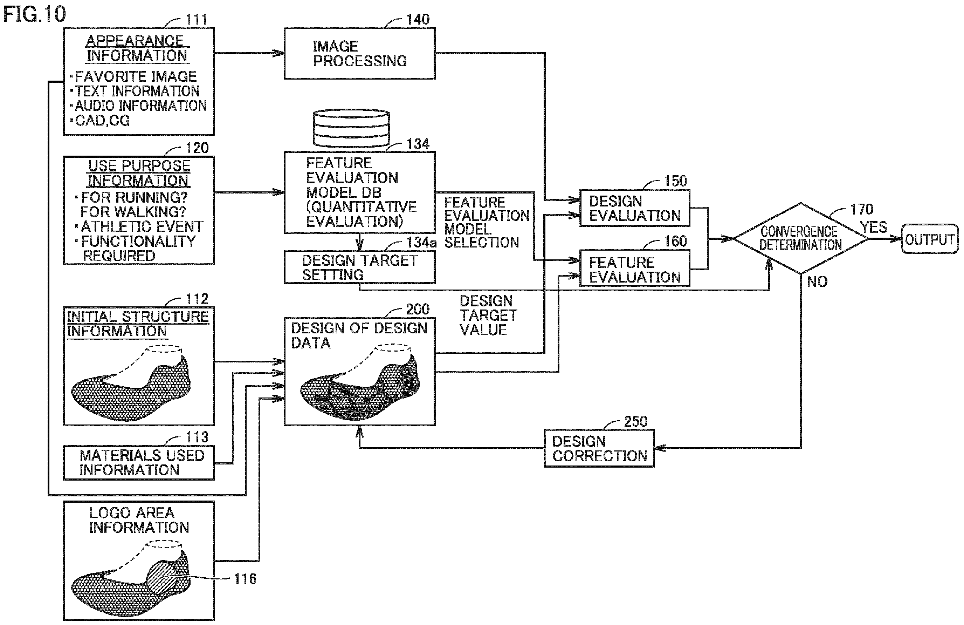

In the design support device according to the first embodiment, the process of supporting the design of the shoe without any limitation when the shoe that meets the preferences of the user is designed has been described. However, among shoes that are being sold, there are areas where the user cannot freely change the design, for example, adding a logo of a manufacturer, and the designs of the shoes may be limited. In the fourth embodiment, an example of a case where the design of the shoe is limited will be described. Fig. 10 is a mode diagram illustrating a process of the design support device 1 according to the fourth embodiment. In the design support device 1 according to the fourth embodiment, the same configuration as the configuration of the design support device 1 according to the first embodiment is denoted by the same reference numeral, and detailed description thereof will not be repeated.

In a case of designing the design data 200 in the initial stage, the design support device 1 designs the design data 200 excluding a logo area. In a case where it is determined to add the logo of the manufacturer on the shoe to a predetermined position, the design support device 1 designs the design data 200 for an area other than the logo area. Specifically, as illustrated in Fig. 10, logo area information 116 is input to the design support device 1 in addition to the appearance information 111, the initial structure information 112, and the materials used information 113. The logo area information 116 is information of a position where the logo of the manufacturer is added to the shoe, and includes, for example, side area information of the shoe.

The design support device 1 designs the design data 200 in the initial stage in which the favorite pattern of the user is mapped to the structure of the upper or the entire shoe based on the appearance information 111, the initial structure information 112, the materials used information 113, and the logo area information 116. Accordingly, the design support device 1 can support the design of the shoe that meets the preferences of the user while ensuring the area for adding the logo of the manufacturer and securing the features required for the shoe worn by the user. Note that, although the logo area information 116 has been described as an example with design limitations, other design limitations such as an area to which a mark or a description determined by law is added and an area to which a mark or a description required for manufacturing management is added may be similarly applied to the design support device 1.

### [Variation]

The present disclosure is not limited to the above embodiments, and various variations and applications are possible. Hereinafter, a variation applicable to the present disclosure will be described.

The design support device 1 according to the embodiment designs the design data 200 by mapping the image of the favorite pattern of the user to the structure of the shoe. However, the favorite pattern of the user may be mapped to an inner side of the shoe without being limited to a case where the favorite pattern of the user is mapped to an outer side of the shoe. In other words, the favorite pattern of the user may be mapped even to a position that becomes invisible when the user wears the shoe. Further, mapping the favorite pattern of the user is not limited to a surface of the shoe, and may be inside the structure of the shoe. In the case of a shoe having the three-dimensional mesh structure, the favorite pattern of the user can be visually recognized even inside the structure of the shoe.

Although the processes of the design support device 1 has been individually illustrated in Figs. 5 and 7 to 10, the processes of the design support device 1 illustrated in Figs. 5 and 7 to 10 can be appropriately combined. For example, the processes of the design support device 1 illustrated in Figs. 8 and 9 may be combined with the process of the design support device 1 illustrated in Fig. 5.

The user who selects or inputs the first information may be different from a user who provides the use result. In other words, the input device may receive the first information selected or input by a designer of the article (for example, the shoe), and may receive a use result of a purchaser of the article (for example, the shoe).

### [Aspects]

(1) A design support device according to the present disclosure is a design support device that supports a design of an article worn by a user, the design support device including:
   an input device that receives at least first information related to an appearance of the article selected or input by the user, and second information related to usage of the article by the user;
   a processing circuitry that corrects design data of the article based on the first information and the second information received by the input device; and
   an output device that outputs the design data corrected by the processing circuitry, in which
   the processing circuitry
      calculates a first evaluation value by evaluating a difference in appearance between the first information and the design data;
      calculates a second evaluation value predicted from the design data for a feature of the article required from the second information;
      corrects the design data based on the first evaluation value and the second evaluation value in a case where at least one of the first evaluation value and the second evaluation value is lower than a target value; and
      outputs the design data in a case where the first evaluation value and the second evaluation value are greater than or equal to the target value.
   Accordingly, the design support device can support the design of the article that meets the preferences of the user while securing the feature required for the article worn by the user.
(2) In the design support device according to (1), the input device receives the design data in an initial stage designed in advance based on the first information, a structure of the article, and a materials used of the article.
(3) In the design support device according to (1), the input device receives information of the structure of the article and information of the materials used of the article, and
   the processing circuitry designs the design data in the initial stage based on the first information, the structure of the article, and the materials used of the article.
(4) The design support device according to any one of (1) to (3), further includes a feature evaluation database from which a feature evaluation model including a plurality of items related to the feature of the article, and a target value set for each of the items is allowed to retrieve based on the second information.
(5) In the design support device according to (4), the feature evaluation database can retrieve different feature evaluation models based on attribute information including at least one of the user's gender, physical information, athletic ability, and running style evaluation database.
(6) In the design support device according to (4) or (5), the input device can receive a use result of the user for the article manufactured with the design data output from the output device, and
   the feature evaluation database updates the feature evaluation model based on the use result of the user received by the input device.
(7) In the design support device according to any one of (4) to (6), the article is footwear worn by the user, and the feature evaluation model includes at least one of cushioning, stability, agility, bending rigidity, gripping property, fitting, durability, air permeability, resilience, and support against cutting move as a feature of the footwear.
(8) In the design support device according to any one of (1) to (7), the input device can receive an evaluation result of the user for the design data output from the output device, and
   the processing circuitry corrects the design data based on the evaluation result of the user received by the input device.
(9) In the design support device according to any one of (1) to (6), the article is footwear worn by the user.
(10) A design support method according to the present disclosure is a design support method of supporting a design of an article worn by a user, the method including:
   receiving at least first information related to an appearance of the article selected or input by the user, and second information related to usage of the article by the user;
   calculating a first evaluation value by evaluating a difference in appearance between the first information received and design data;
   calculating a second evaluation value predicted from the design data for a feature of the article required from the second information received;
   correcting the design data based on the first evaluation value and the second evaluation value in a case where at least one of the first evaluation value and the second evaluation value is lower than a target value; and
   outputting the design data in a case where the first evaluation value and the second evaluation value are greater than or equal to the target value.

Although the embodiments of the present invention have been described, it should be considered that the embodiments disclosed herein are illustrative in all the respects and not restrictive. The scope of the present invention is defined by claims, and it is intended that meanings equivalent to the claims and all modifications within the scope are included.

## Claims

1. A design support device (1) that supports a design of an article worn by a user, the design support device (1) comprising:
an input device (14) that receives at least first information (111) related to an appearance of the article selected or input by the user, and second information (120) related to usage of the article by the user;
a processing circuitry (11) that corrects design data (200) of the article based on the first information (111) and the second information (120) received by the input device (14); and
an output device (14) that outputs the design data (200) corrected by the processing circuitry (11), wherein
the processing circuitry (11)
calculates a first evaluation value by evaluating a difference in appearance between the first information (111) and the design data (200);
calculates a second evaluation value predicted from the design data (200) for a feature of the article required from the second information (120);
corrects the design data (200) based on the first evaluation value and the second evaluation value in a case where at least one of the first evaluation value and the second evaluation value is lower than a target value; and
outputs the design data (200) in a case where the first evaluation value and the second evaluation value are greater than or equal to the target value.

2. The design support device (1) according to claim 1, wherein the input device (14) receives the design data (200) in an initial stage designed in advance based on the first information (111), a structure of the article, and a materials used of the article.

3. The design support device (1) according to claim 1, wherein
the input device (14) receives information of the structure of the article and information of the materials used of the article, and
the processing circuitry (11) designs the design data (200) in the initial stage based on the first information (111), the structure of the article, and the materials used of the article.

4. The design support device (1) according to claim 1, further comprising a feature evaluation database (134) from which a feature evaluation model including a plurality of items related to the feature of the article, and a target value set for each of the items is allowed to retrieve based on the second information (120).

5. The design support device (1) according to claim 4, wherein the feature evaluation database can retrieve different feature evaluation models based on attribute information including at least one of the user's gender, physical information, athletic ability, and running style.

6. The design support device (1) according to claim 4, wherein
the input device (14) can receive a use result of the user for the article manufactured with the design data (200) output from the output device (14), and
the feature evaluation database (134) updates the feature evaluation model based on the use result of the user received by the input device (14).

7. The design support device (1) according to claim 4, wherein
the article is footwear worn by the user, and
the feature evaluation model includes at least one of cushioning, stability, agility, bending rigidity, gripping property, fitting, durability, air permeability, resilience, and support against cutting move as a feature of the footwear.

8. The design support device (1) according to any one of claims 1 to 7, wherein
the input device (14) can receive an evaluation result of the user for the design data (200) output from the output device (14), and
the processing circuitry (11) corrects the design data (200) based on the evaluation result of the user received by the input device (14).

9. The design support device (1) according to any one of claims 1 to 6, wherein the article is footwear worn by the user.

10. The design support device according to any one of claims 1 to 7, wherein
the processing circuitry(11) performs design correction (250) on the design data (200) to improve an item in which a design target value is not cleared from an evaluation result, assuming that the design target value is not cleared in the convergence determination (170), and
performs a design evaluation (150) and the a feature evaluation (160) again on the design data (200) subjected to the design correction (250) until the design target value is cleared in the convergence determination (170).

11. The design support device according to any one of claims 4 to 7, wherein the processing circuitry(11) updates the feature evaluation model stored in the feature evaluation database (134), or updates an algorithm for mapping an image of a favorite pattern of the user to a structure of an upper of the article or a whole of the article based on a use result of the user received by the input device (14).

12. A design support method of supporting a design of an article worn by a user, the design support method comprising:
receiving at least first information (111) related to an appearance of the article selected or input by the user, and second information (120) related to usage of the article by the user;
calculating a first evaluation value by evaluating a difference in appearance between the first information (111) received and design data (200);
calculating a second evaluation value predicted from the design data (200) for a feature of the article required from the second information (120) received;
correcting the design data (200) based on the first evaluation value and the second evaluation value in a case where at least one of the first evaluation value and the second evaluation value is lower than a target value; and
outputting the design data (200) in a case where the first evaluation value and the second evaluation value are greater than or equal to the target value.
